# EUROPEAN PATENT APPLICATION

(11) **EP 1 291 804 A1**
(43) Date of publication of application: **12.03.2003**
(21) Application number: 02017638.4
(22) Date of filing: 06.08.2002
(51) Int. Cl.: G06K 7/00

(54) **PCMCIA card with smart card reader**

(30) Priority: 07.08.2001 FR 0110673
(71) Applicant: FCI, 75009 Paris (FR)
(72) Inventor: Camacho, Gabriel, 57310 Guenange (FR)
(74) Representative: Beetz & Partner Patentanwälte

(57) **Abstract**

The invention relates to a PCMCIA card (1) with smart card reader (2), the card reader (2) having a card reader housing (3) forming an integral part of the PCMCIA card housing, into which it is possible to insert at least one smart card (4) perpendicularly to the plane of the card.

## Description

The present invention relates to a PCMCIA card comprising a smart card reader.

PCMCIA cards are, for example, used to add supplementary functions to a computer such as for example a portable computer or for connecting the latter to external equipment or to a network.

Thanks to such a card, one can increase the capacity of the memory of a computer or make a connection to a telephone line or to a portable telephone. It is moreover possible not to use the PCMCIA card as a data or a function support itself, but to use it as an input/output unit for information stored on other data supports.

Such a card is known from document WO 00/77715 A1 which discloses a card reader into which a smart card is introduced in the direction of a longitudinal extension of the PCMCIA card at its back end. Because of the low available height of construction of such cards, construction-related limits are very rapidly reached when it is necessary to provide in the PCMCIA card another board in addition to the card reader. Similarly, the manipulation to introduce and withdraw the smart card turns out to be extremely difficult in a portable computer, due, for example to the small amount of space available and of the customary position of an insertion slot for a PCMCIA card.

A PCMCIA card with an integrated smart card reader is known from US-6 015 092, in which the smart card reader is arranged at the back end of the PCMCIA card perpendicularly to its longitudinal extension.

Document US-6 015 092 teaches how to hinge or attach a card reader to the back end of a PCMCIA card. In this housing, the card reader consists solely of a slot in an internal wall, where, in a defined space, a contact is provided to receive information from the smart card. This contact is connected to the board of the PCMCIA card by means of a flat flexible cable. This arrangement is not flexible as far as the choice of the card is concerned. No mechanics are provided, which are really suitable for a card reader. It is moreover necessary to provide on the board in the PCMCIA card, a zone on its surface, which can be wired with a flat flexible cable.

The purpose of the present invention is to develop a PCMCIA card of the type which enables the user to equip a PC or a portable computer in a simple manner with such a card and to place a card reader into his computer, which is easy to be used and flexible enough to be adapted to smart cards of different sizes.

This purpose is reached by a smart card reader, which has a card reader housing integrated into the PCMCIA card housing and into which at least one smart card can be inserted perpendicularly to the surface of the PCMCIA card.

According to one preferred form of embodiment of the present invention, the card reader housing extends the PCMCIA card housing at its back end and its bottom is aligned on the lower side of the PCMCIA card.

According to another preferred form of embodiment, the card reader housing has, when it is inserted, the lateral wall to be plugged into, on the same level as the housing of the apparatus into which the PCMCIA card is inserted.

According to another preferred form of embodiment, several card readers are arranged in the card reader housing.

According to another preferred form of embodiment, the opening or openings for the insertion of smart cards are on the upper side of the card reader housing.

According to another preferred form of embodiment, the openings for the introduction of modules of the card reader are arranged in a parallel or an aligned manner.

According to another preferred form of embodiment, an opening for the introduction of a smart card of the size of a bank card and parallel to the latter, has two introduction openings arranged one next to the other for SIM cards.

According to another preferred form of embodiment, the card reader module is designed for sizes of smart cards such as media smart cards and/or smart cards and/or MMC cards and/or memory cards.

According to another form of embodiment, the card reader housing is essentially rectangular and its upper face has a gripping cavity to facilitate the withdrawal of smart cards.

According to another form of embodiment, the bottom of the PCMCIA card housing is extended by a bottom module, which can be locked to the latter by the bottom of the card reader housing, a module to which it is possible to attach the upper part of the card reader housing.

According to another form of embodiment, the card reader housing and the module or modules of the card reader, are connected on their lower ridge to the PCMCIA card by means of printed circuit connectors.

According to another form of embodiment, the bottom of the card reader housing is fixed by means of lateral bars to the protective screen of the bottom of the PCMCIA card housing by interlocking.

According to another form of embodiment, a central part of the card reader housing comprises in one piece, the lateral walls as well as a shutter for covering the zone of connection to the PCMCIA card, which covers an upper protective screen in this zone.

In the paragraphs which follow, the invention is explained in greater detail with the help of the description of an embodiment example referring to drawings.
- Fig. 1: shows perspective views of the PCMCIA card according to the invention with a smart card reader;
- Fig. 2: shows the introduction of a card according to the invention into a portable computer;
- Fig. 3: shows the different sizes of smart cards which are able to be inserted;
- Fig. 4: shows different components of a card according to the invention;
- Fig. 5: shows different parts of the card according to the invention;
- Fig. 6: shows a part-section of the card reader housing and
- Fig. 7: shows a card reader used in the invention, with printed circuit connectors

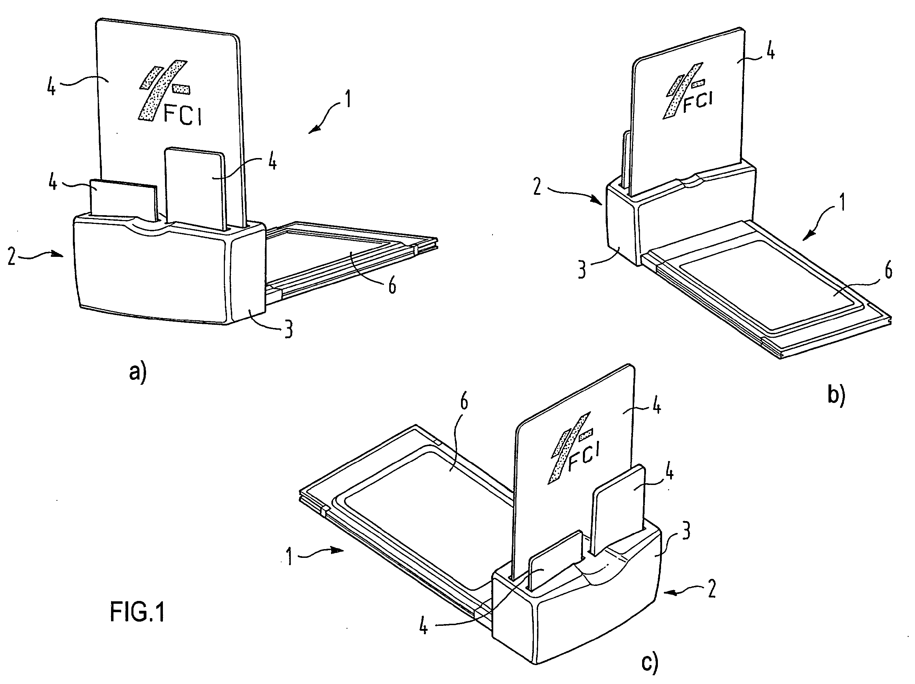

Fig. 1 shows the PCMCIA card according to the invention (hereinafter for simplicity called the PC card) in different perspective views. The PC card essentially consists of a part able to be inserted into the receptacle of a computer, of the PC card housing 6 and of a part of the housing with integral card reader 3. Inside are arranged one or more card readers, which are designed for the different sizes of smart cards 4.

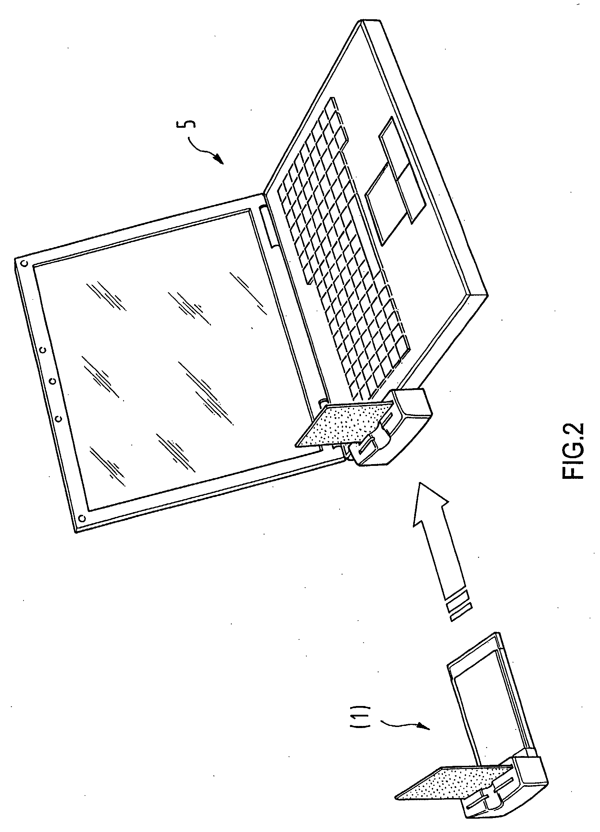

Fig. 2 shows the insertion of a PC card according to the invention 1 into a reception slot of a portable computer 5. It can be seen that when it is inserted, the smart card is very close to the keyboard in the card reader housing 3, which represents a good arrangement and a solution, which will save space.

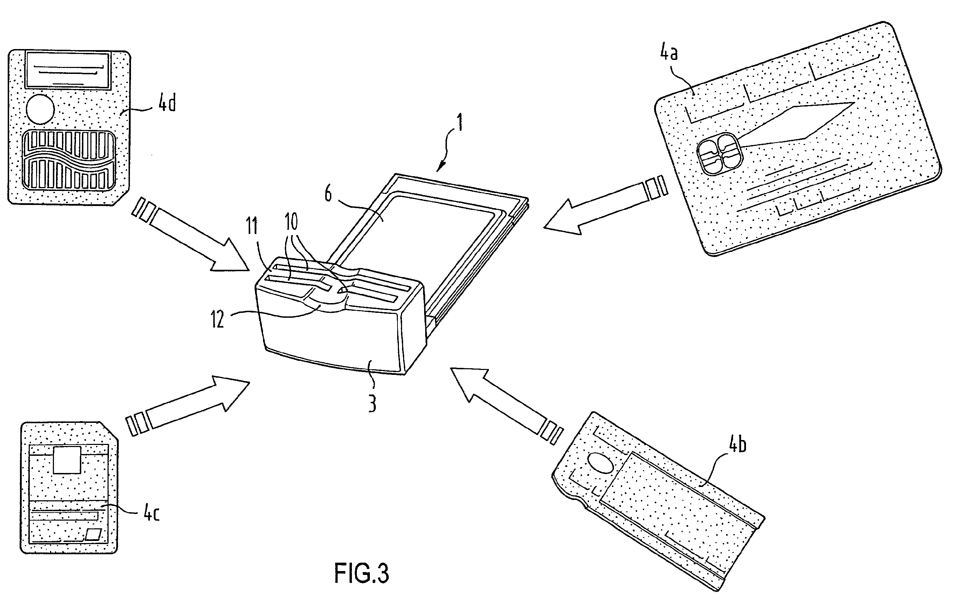

Fig. 3 shows that the card reader 3 has three different input openings 10 for smart cards into which different sizes of smart cards can be introduced. Examples can be seen of a smart card 4a with a bank card size, a memory card 4b, a MMC/SD card 4c and a media smart card 4d. In the example shown, the housing 3 accordingly shelters three different card reader modules 11.

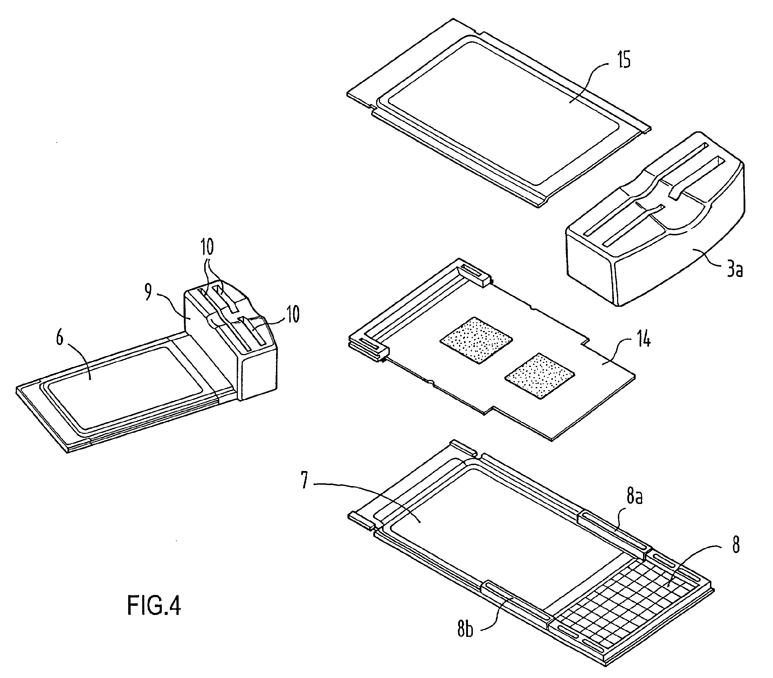

Fig. 4 shows the different components of the PC card according to the invention, on which on the lower side of the PC card housing 7 which also has a metal protective screen the bottom board 8 of the card reader being fixed by the bars 8a, 8b. On the protective screen of the bottom board 7, there is a board 14 with a printed circuit and electronic components, which is, in turn, covered by an upper protective board 15. As can be seen on the left side of Fig. 4, a shoulder on the lower edge of the upper part 3a of the card reader housing partly covers the upper protection 15 and the surfaces of the shoulder and those of the upper protection 15 are aligned with one another.

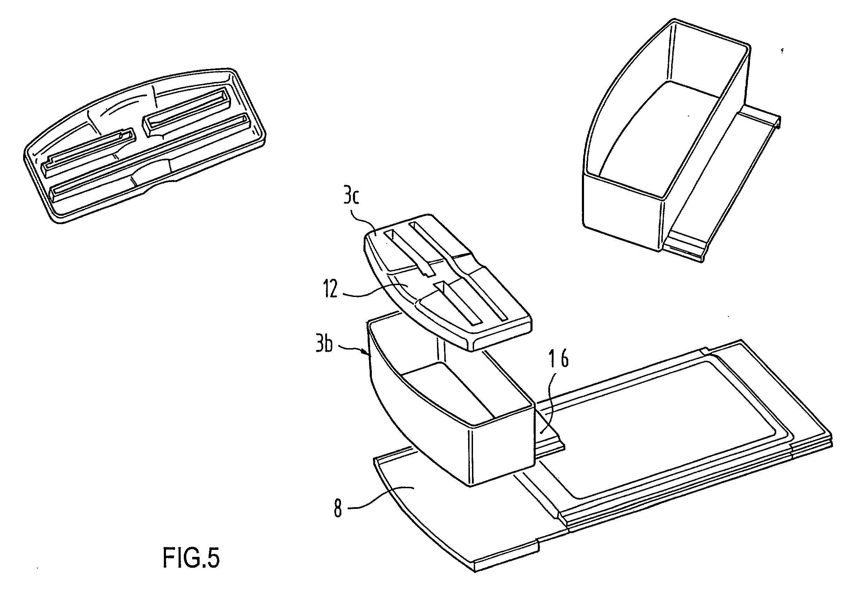

As shown Fig. 5, the housing 3 of the card reader 2 can also, in order to simplify manufacture, consist of a median part 3b comprising a shutter 16 for covering the zone of connection to the PC card and an upper part 3c which can be boxed one on top of the other. In the middle of the upper part 3c, a gripping cavity 12 is provided, which facilitates the withdrawal of smart cards from the card reader.

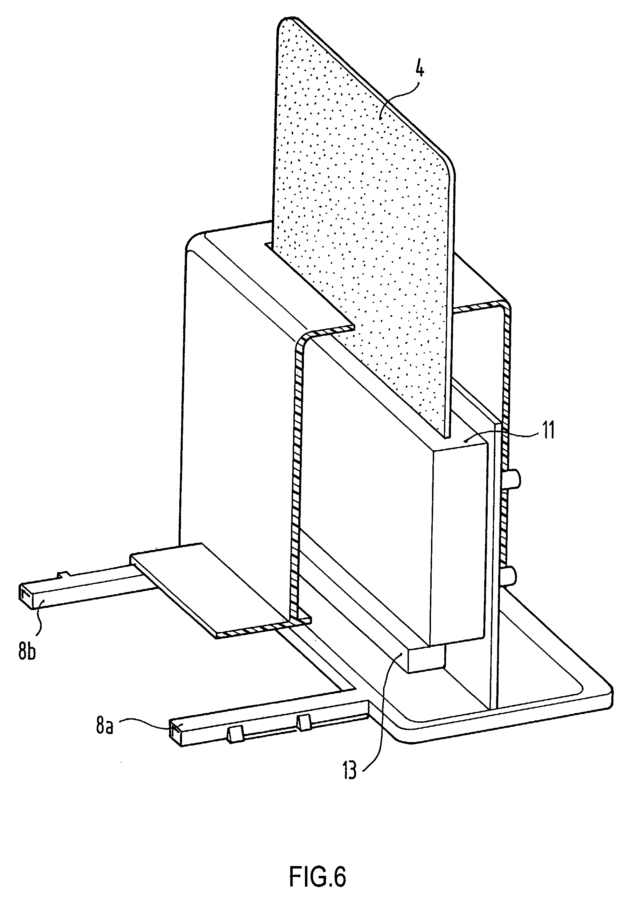

Fig. 6 shows the card reader housing in part-section. It is possible to see the module of the card reader 11 inside the housing, which is connected by a printed circuit connector 13 to the board 14 of the PC card. Apart from the card reader module 11, it is possible to provide in addition, other card reader modules for other smart card sizes.

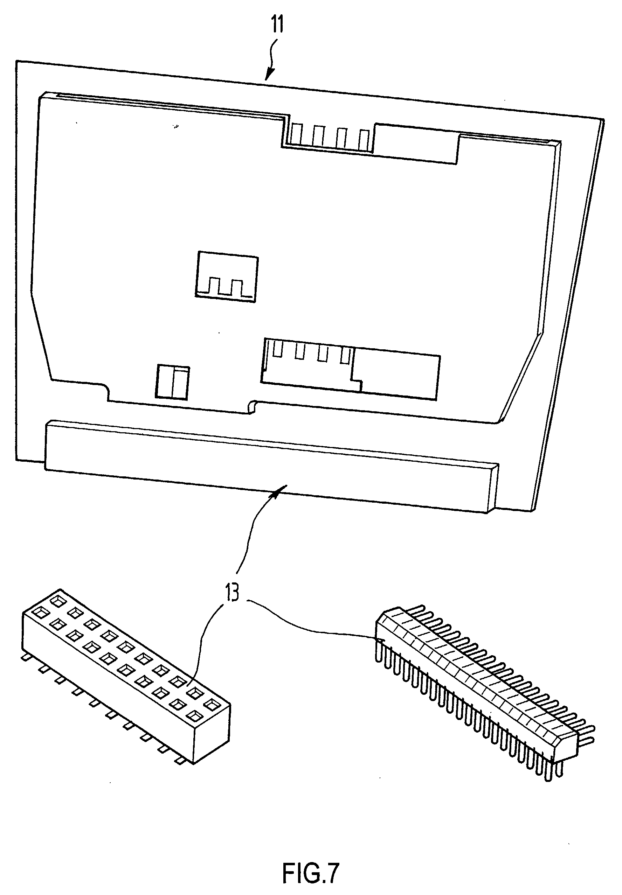

Fig. 7 shows an alternative form of flat configuration of a card reader 11 with a printed circuit connector 13. This consists of two parts, one of which is always fixed and wired to the board or to the card reader module.

The PC card described above makes possible variable use for different smart card sizes: the card reader housing has sufficiently large dimensions to shelter commercial card reader modules whose functioning via the mechanical components provided ensures a contact which saves the card. The fact of having simultaneously provided different insertion slots or different card reader modules makes it possible to transmit information from one card to another or the simultaneous processing of information from several cards.

The description of an embodiment example of the present invention is only intended for the illustration of the invention described in the Claims.

## Claims

1. A PCMCIA card (1) comprising a smart card reader (2) **characterised in that** the smart card reader (2) has a card reader housing (3) integrated into the PCMCIA card housing into which at least one smart card (4) can be inserted perpendicularly to the surface of the PCMCIA card.

2. A PCMCIA card according to Claim 1 **characterised in that** the card reader housing (3) extends the PCMCIA card housing (6) at its rear end and that its bottom (8) is aligned on the lower side of the PCMCIA card housing (7).

3. A PCMCIA card according to Claim 1 or Claim 2, **characterised in that** the card reader housing (3) has, when it is inserted, the lateral wall (9) of the side to be plugged in on the same level as the housing of apparatus (5) into which the PCMCIA card (1) is inserted.

4. A PCMCIA card according to one of the Claims 1 to 3, **characterised in that** several card readers (11) are arranged in the card reader housing (3).

5. A PCMCIA card according to one of the Claims 1 to 4, **characterised in that** the smart card (4a, 4b, 4c) insertion opening or openings (10) are located on the upper side of the card reader (3).

6. A PCMCIA card according to Claim 5, **characterised in that** the insertion openings (10) of the card reader (11) modules are arranged parallel and/or aligned.

7. A PCMCIA card according to Claim 6, **characterised by** an insertion opening (10) for a smart card (4a) with the size of a bank card and parallel thereto two insertion openings (10) for SIM cards, arranged one next to the other.

8. A PCMCIA card according to one of the Claims from 5 to 7, **characterised in that** the card reader module (11) is designed for smart card sizes such as media smart cards (4d) and/or smart cards (4a) and/or MMC cards (4c) and/or memory cards (4b)

9. A PCMCIA card according to one of the Claims from 1 to 8, **characterised in that** the housing of the card reader (3) is essentially rectangular and that its upper face has a gripping cavity to facilitate the withdrawal of smart cards (4).

10. A PCMCIA card according to Claim 1, **characterised in that** the bottom of the PCMCIA card (8) is extended by a bottom module which can be locked to it by the bottom of the card reader housing (7), the module to which it is possible to attach the upper part of the card reader housing (3a)

11. A PCMCIA card according to one of the preceding Claims, **characterised in that** in the card reader housing (3), the module or modules of the card reader (11) is/are connected to their lower ridges to the PCMCIA card (1) by means of printed circuit connectors (13).

12. A PCMCIA card according to Claim 2, **characterised in that** the bottom (8) of the card reader housing (3) is fixed by locking by lateral bars (8a, 8b) to the bottom protective screen (7) of the PCMCIA card (6).

13. A PCMCIA card according to Claim 2, **characterised in that** a median part (3b) of the card reader (3) comprises in one piece, lateral walls as well as a shutter (16) to cover the zone of connection to the PCMCIA card (1) which covers an upper protective screen (15) in this zone.
